Europäisches Patentamt

European Patent Office

Office européen des brevets

(19)

(11) Veröffentlichungsnummer: **0 023 159**
**A1**

(12) ## EUROPÄISCHE PATENTANMELDUNG

(21) Anmeldenummer: **80302540.2**

(22) Anmeldetag: **24.07.80**

(51) Int. Cl.³: **G 21 C 3/62**

(30) Priorität: **24.07.79 LU 81544**

(43) Veröffentlichungstag der Anmeldung:
**28.01.81 Patentblatt 81/4**

(84) Benannte Vertragsstaaten:
**DE FR GB**

(71) Anmelder: **EUROPEAN ATOMIC ENERGY COMMUNITY (EURATOM)**
**Batiment Jean Monnet Plateau du Kirchberg Boîte Postale 1907**
**Luxembourg(LU)**

(72) Erfinder: **Blank, Hubert**
**European Institut fur Transurane Postfach 2266**
**Karlaruhe(DE)**

(72) Erfinder: **Matzke, Hans Joachim**
**European Institut fur Transurane Postfach 2266**
**Karlaruhe(DE)**

(72) Erfinder: **Richter, Karl**
**Ludwig-Maruumstrasse 14**
**Karlsruhe(DE)**

(72) Erfinder: **Werner, Paul**
**Kolbergerstrasse 12G**
**Karlsruhe-Waldstad(DE)**

(74) Vertreter: **Baverstock, Michael George Douglas et al,**
**BOULT, WADE & TENNANT 27 Furnival Street**
**London, EC4A 1PQ(GB)**

(54) **Fortgeschrittene Kernbrennstoffe mit erniedrigter Bruchfestigkeit und geringer reaktorstrahlungsinduzierter Spannungsentwicklung.**

(57) Kernbrennstoffe aus Uran-Plutonium Mischkarbid, Mischkarbonitrid und Mischnitrid mit einem Zusatz bis 10 % Uran-Plutonium Mischsequikarbid bzw. Mischsesquinitrid, in denen das Uran-Plutonium Mischsesquikarbid bzw.- sesquinitrid an den Korngrenzen des Mischkarbides, Mischkarbonitrides und Mischnitrides eine Zellstruktur bildet, welche die Körner umbüllt.

EP 0 023 159 A1

Croydon Printing Company Ltd

-1-

"FORTGESCHRITTENE KERNBRENNSTOFFE MIT ERNIEDRIGTER BRUCHFESTIGKEIT
UND GERINGER REAKTORSTRAHLUNGSINDUZIERTER SPANNUNGSENTWICKLUNG"

## Beschreibung

Stand der Technik

In der Literatur (1, 2, 3, 4, 5, 6, 7, 8) und durch wissenschaftliche
Tagungen sind in den letzten Jahren im Bereich der keramischen Industrie
Methoden bekanntgeworden, die Festigkeit oxidkeramischer Werkstoffe
durch Beimischung geringer Mengen von $ZrO_2$-Partikeln zu erhöhen. Diese
Partikel können entweder durch Temperaturänderungen gegenüber einer
festen Umwandlungstemperatur oder unter gewissen Bedingungen auch durch
äussere Spannungen zu einer Phasentransformation veranlasst werden, bei
der sie ihr Volumen ändern. Dadurch werden im Gefüge lokale Spannungsfelder erzeugt, die zur Bildung von Mikrorissen um diese Partikel führen.
Von aussen eingeleitete Spannungen (z.B. durch einen Temperaturgradient)
erfahren an einem derartigen keramischen Körper eine "Energiestreuung",
wodurch eine Erhöhung der Festigkeit erzielt wird. Der Körper kann höhere
elastische (thermoelastische) Spannungen aufnehmen, ohne dass dies zu
einer überkritischen Rissausbreitung mit anschliessendem Bruch führt.

Aufgabe

Es lag immer schon das Bestreben vor, zwei an und für sich widerstrebende
Werkstoffeigenschaften, wie die Härte und die Zähigkeit, zu steigern, um
den erhöhten technischen Anforderungen, als Beispiel sei $Si_3N_4$ für die
Anwendung als keramische Gasturbinenschaufel genannt, gerecht zu werden.
Im Fachgebiet der keramischen Karbid- und Nitridkernbrennstoffe jedoch
sind bis heute keine Versuche bekannt geworden, die darauf abzielen, die
Steifigkeit der Reaktorkeramik herabzusetzen.

Die unter üblichen Fertigungsbedingungen hergestellten keramischen Karbid-
oder Karbonitrid-Reaktorbrennstoffzylinder (Tabletten) mit der dabei entstandenen kornförmigen und formschlüssigen Gefügestruktur besitzen eine
enorme "natürliche" Härte und Steifigkeit. Diese bewirken unter Reaktorbetriebsbedingungen und besonders auch bei hohen Temperaturgradienten
über thermoelastische Spannungen den Aufbau grosser innerer Druck-Zug-Werkstoffspannungen, die sich in katastrophal und unkontrolliert verlaufenden
Brüchen entladen. Dabei wird ein kritisch verlaufendes radiales sowie
eventuell auch konzentrisches Rissbruchmuster erzeugt, das alle Anzeichen
einer hohen Sprödigkeit nachweist.

BAD ORIGINAL

Die daraus resultierenden Tablettenbruchstücke bewirken im Reaktorbrennstab, insbesondere bei Na-Bindung über Reibungseffekte und Verkantungen zwischen Hüllrohr und Brennstoff örtlich weit überhöhte Hüllrohrspannungen und +Dehnungen, die letztlich zum Bruch des Brennstabhüllrohres führen. Die Lebensdauer, d.h. der Abbrand eines Brennstabes wird jedoch vom Zustand des Brennstabhüllrohres bestimmt. Deshalb ist es wesentlich, für den "fortgeschrittenen Kernbrennstoff" (englisch "advanced fuel"), worunter man die eingangs erwähnten Kernbrennstoffe versteht, Karbide bzw. Nitride zu entwickeln, die trotz des unvermeidbaren inneren Spannungsaufbaus im Brennstoff ein möglichst niedriges Spannungsfeld entwickeln und feinkörnig zerbrechen.

Vorteile

Die dem Mischkarbid, Mischkarbonitrid und Mischnitrid sowie dem UC mit kornförmig verzahnter formschlüssiger Gefügestruktur normalerweise anhaftende Neigung, bei Neutronenbestrahlung von bestimmten Temperaturniveaus an durch Spaltgasblasen sowie in geringerem Masse durch feste Spaltprodukte in konzentrischen Zonenbereichen von zylindrischen Brennstoffkörpern sowohl einen enormen inneren als auch thermoelastischen Spannungsaufbau zu erzeugen, bewirkt bei der heutzutage üblichen kornförmigen formschlüssigen Gefügestruktur das Auslösen eines Bruchmechanismusses mit Verschiebung der Bruchstücke, dessen Verlauf zu katastrophal örtlich überhöhten Spannungen und Dehnungen des Brennstabhüllrohres und somit letztlich zu dessen Bruch führt.

Durch zahlreiche Bestrahlungsversuche der staatlichen Forschungseinrichtungen in Deutschland, Frankreich und England ist diese Erscheinung in vielfältigem Masse belegt.

Bis heute wurde die Auffassung vertreten, dass eine gangbare Lösung dieses Problems vorerst bei He-Bindung nur durch eine niedrige Pelletdichte, niedrige Schmierdichte und ein niedriges Temperaturniveau des durch seine hohe Wärmeleitfähigkeit und Energiedichte empfohlenen Karbid- bis Nitridkonzeptes zu verwirklichen wäre. Dies verringert jedoch die ursprünglich angestrebte hohe Leistungsdichte und die Brennstoffausnutzung eines fortgeschrittenen Reaktorbrennstoffes in hohem Masse.

- 3 -

Im Rahmen der bisher bekannt gewordenen und bereits im Einsatz befindlichen fortgeschrittenen Brennelementkonzepte - z.B. für FBR-Programme - ist besonders die Entwicklung der von flüssigem Natrium umgebenen MC-Brennstoff-Tablettensäule mit grossem von Natrium gefülltem Spalt zwischen Tablettensäule mit grossem von Natrium gefülltem Spalt zwischen Tabletten und Hüllrohr hervorzuheben, M = (U.Pu). Dabei wird die durch den Kernspaltungsprozess entwickelte Wärme über die Flüssigmetallkühlung am Umfang der Tabletten mit hohem Wirkungsgrad an das Wärmetransportmittel zur Heissdampfgewinnung übertragen. Durch die bis heute übliche kornförmig verzahnte Gefügestruktur werden jedoch bei der Bildung von thermoelastischen Spannungen über katastrophal verlaufende Rissbrüche Grossbruchstücke erzeugt, die den Natrium gefüllten Spalt teilweise überbrücken. Dies führt zu sogenannten "Hotspots" und lokalen Spannungsüberhöhungen, wobei der Hüllrohrwerkstoff beschädigt wird.

Das ursprünglich geplante fortschrittliche Mischkarbid-, Mischkarbonitridbis Mischnitridkonzept kann nun durch gezielte Einführung der eingangs beschriebenen $M_2C_3(M_2N_3)$-Korngrenzen-Netzwerkstruktur bei gleichartiger ursprünglicher Brennstoffspezifikation weiter entwickelt und die Einführung eines Hochleistungs-Mischkarbidbrennstoffes bzw. -Karbonitrid- oder -Nitridbrennstoffes vorangetrieben werden, M = (U.Pu).

Im Falle des nahezu absolut stöchiometrischen Uran-Karbids mit Uran-Korngrenzenmikrofilm (mit Uran-Mikroschichtung an den Korngrenzen) wird durch die bereits vorher beschriebene wesentlich günstigeren Energieeigenschaften eine fortgeschrittene UC-Brennstofflinie mit höherem Wirkungsgrad als das bisherige Oxidverfahren für the thermischen Reaktoren eröffnet.

Die dem MC mit $M_2C_3$-Korngrenzennetzwerkstruktur anhaftende und die im folgenden beschriebenen günstigen Werkstoffeigenschaften verhindern die vorher erwähnten Heilstelleneffekte und erhöhen die Lebensdauer (Abbrand) der Brennelemente, M = (U.Pu).

Darstellung der Erfindung

Im Gegensatz zur Entwicklung in der keramischen Industrie sollen die mechanischen Eigenschaften der fortgeschrittenen keramischen Kernbrennstoffe

- 4 -

ohne störende Fremstoffzusätze so verändert werden, dass die natürlichen Eigenheiten, nämlich ausserordentliche Sprödigkeit, Steifigkeit, Bruchanfälligkeit und Härte nicht zur vorzeitigen Zerstörung des sie umhüllenden Brennstabrohres führen.

Bei fortgeschrittenen keramischen Kernbrennstoffen liegt das Bestreben vor, ohne beigemischte Fremdstoffpartikel auszukommen, da diese die Neutronenökonomie durch Absorption und sonstige Nebeneffekte verringern und so zu einer geringeren Energieausbeute führen würden. Vielmehr wünscht man mit einem herstellungsbedingten unvermeidbaren Minimum an gegebenen "natürlichen" Unreinheiten auszukommen.

Mit Hilfe des bei der Mischkarbidherstellung (Mischnitrid) unbedingt erforderlichen Kohlenstoffes (bzw. Stickstoffes), der hauptsächlich zur gewünschten $(U,Pu)C$-Bildung $\overline{/(U,Pu)N\text{-Bildung}/}$ führt, jedoch ausserdem noch höhere Mischkarbide (Mischnitride) bilden kann, wie z.B. $MC_2$ $(MN_2)$ $\overline{/M = (U,Pu)/}$ und $M_2C_3$ $(M_2N_3)$, wird eine solche $M_2C_3$ $(M_2N_3)$-Korngrenzenstruktur gebildet, dass durch die im Reaktorbetrieb bedingten thermoelastischen Spannungen die Steifigkeit des keramischen Brennstoffes (Fliessspannungen $\mathcal{C}_f$) wesentlich im Verhältnis von z.B. 1 : 10 der sonst bei kornförmiger $M_2C_3$ $(M_2N_3)$-Struktur entstehenden Fliesspannungen herabgesetzt wird. Die Plastizitätseigenschaften des Brennstoffes werden dadurch bedeutend verbessert.

Dabei ist gegeben, dass der Mikro-Härtewert HV des $M_2C_3$ $(M_2N_3)$ (1280 $M_2C_3$ - 1030 MC) sich wesentlich von dem von ihm vollständig oder nahezu vollständig umschlossenen Matrixkern-MC (MN) unterscheidet und deshalb durch eine harte Auflage (Korngrenze) auf weichem Untergrund (Matrix) bei Auftreten von thermoelastischen Spannungen und sonstigen Belastungen (z.B. Spaltgasdruck) zu kontrollierten intergranularen Bindungsbrüchen an den Korngrenzen führt.

Die zahllosen um jedes Matrixkorn des Gefüges entstehenden intergranularen Bindungsbrüche führen zu einer bedeutenden Herabsetzung des Spannungsaufbaus im Brennstoff. Dabei wird die Entstehung von grossen scharfkantigen Bruchstücken vermieden, da sich unzählige kleine Risse um die Matrixkörner bilden,

- 5 -

die bei relativ geringen Verschiebungen eine begrenzte Formschlüssigkeit behalten, wodurch der Zusammenhalt der Tabletten im thermoelastischen Spannungsfeld erhalten bleibt. Bei mitwachsender Betriebsdauer erfolgender Schwellung des Brennstoffs werden so zahlreiche Berührungspunkte an der Innenoberfläche des Hüllrohres erzeugt und somit eine gleichmässige Belastung des Hüllrohres gewährleistet. Dies verlängert die Lebensdauer der Brennstäbe.

Die thermische Stabilität der $M_2C_3$ ($M_2N_3$)-Korngrenzennetzwerk-Gefügestruktur auch bei Reaktorbetrieb wird durch die $M_2C_3$($M_2N_3$)-Konzentration von 5 - 10 % erreicht /9/. Bei jedem erneuten Spannungsaufbau im Brennstoff setzt der vorher beschriebene intergranulare Bruchmechanismus ein und erniedrigt reversibel die Spannungsfelder. Dabei wird der erhöhte Pu-Spaltstoffgehalt im $M_2C_3$ bzw. $M_2N_3$ zu einer höheren Spaltrate (Wärmeenergiefreisetzung) als in der Matrix führen und dadurch über unterschiedliche Wärmeausdehnungskoeffizienten zwischen Matrix und Korngrenze diesen Vorgang wesentlich unterstützen.

Durch die eingangs beschriebene $M_2C_3$ ($M_2N_3$)-Strukturform und der dadurch abgerundeten Grobkornstruktur von z.B. $\geq$ /100 Mikrometer Korngrösse und den bei Belastung (Spannung) auftretenden Korngrenzenrissen wird für einen Grossteil dieser Kornstruktur im Vergleich zur verzahnten kornförmigen Struktur der kraftschlüssige Bindungszusammenhang (Bindungskräfte) herabgesetzt. Dabei entsteht bei Anliegen einer äusseren Spannung ein labiler Kornbeharrungszustand und damit Drehmomente je Korn, die vorzugsweise die Zugspannungsempfinglichkeit dieses Kernbrennstoffes wesentlich erhöhen.

Das unter 3.1 bis 3.5 erwähnte Materialverhalten bewirkt bei wiederholter Bildung von thermoelastischen Spannungen eine ebenso wiederkehrende Vielzahl von Korngrenzenrissen, wodurch die Bildung durchgehender katastrophal verlaufender radialer und konzentrischer Risse in den Brennstofftabletten vermieden wird und ein Grossteil der an die Korngrenzen als Korngrenzendekoration gewanderten Spaltgasblasen ihr Spaltgas über das Rissvolumen abgeben. Dadurch wird die Grösse des Spannungsfeldes im Brennstoff verringert.

BAD ORIGINAL

Die katastrophal verlaufende Radialrissbildung erzeugt besonders gefährliche Auswirkungen auf die Hüllrohe in Brennstäben mit Na-Bindung. Diese Stäbe sind mit einem ausgedehnten Radialspalt (ca. 200 Mikrometer) zwischen Brennstoff und Hülle versehen, der mit flüssigem Natrium ausgefüllt ist. Dort ereignen sich dann die in der Einleitung erwähnten lebensdauerverkürzenden Vorgänge.

Im Zusammenhang mit dem ~~unter Punkt 3.5., 3.4., 3.3., 3.2. und 3.1.~~ beschriebenen wird das Wachstum des inneren Brennstoffdurchmessers sowie des äusseren Hüllrohrdurchmessers in Abhängigkeit vom Abbrand und im Temperaturbereich von z.B. 1673°K bis 1873°K wesentlich herabgesetzt.

## Literaturangaben

1      Nils Claussen, Be. Dt. Keram. Ges. 54 (1977) 12.

2      F.F. Lange, Westinghouse research Laboratories, Pittsburg, Pensilvania 15235.

3      J. Steeb, Bruchenergieabsorption in $Al_2O_3$ durch eingelagerte $ZrO_2$-Teilchen, Dipl.-Arbeit, Stuttgart 1975.

4      N. Claussen, Fracture toughness of $Al_2O_3$ with an unstabilized $ZrO_2$ dispersed phase.
J. Amer.-Ceram. Soc. 59 (1976) 49-51.

5      Lange, Interaction of a crack front with a second phase dispersion, Phil. Mag. 22 (1970) 983-992.

6      D.L. Porter and A.H. Herner, Mechanism of toughening partially stabilized zirconia, J. Amer.-Ceram.Soc. 60 (1977) 183-184.

7      N. Claussen, Stress induced transformation of mestastable tetragonal $ZrO_2$ particles in an $Al_2O_3$ matrix.
J. Amer.-Ceram.Soc. 60 (1977) 11-12.

8      R. Paris, J.T. Donant, J.Brit. Nucl. En.Soc. 10 (1971) S. 187.

9      R.W. Jones and J.L. Cresthwaite "Uranium Carbide Fuel for Organic Cooled Reactors", Canada Report AECL-4443 (1973), and D.G. Turner "WR-1 General Description", Canada Report AECL-4763(1975).

-8-

Patentanspruch

Kernbrennstoffe aus Uran-Plutonium Mischkarbid, Mischkarbonitrid und Mischnitrid mit einem Zusatz bis 10 % Uran-Plutonium Mischsequikarbid bzw. Mischsesquinitrid dadurch gekennzeichnet, dass das Uran-Plutonium Mischsesquikarbid bzw.-sesquinitrid an den Korngrenzen des Mischkarbides, Mischkarbonitrides und Mischnitrides eine Zellstruktur bildet, welche die Körner umhüllt.

## EUROPÄISCHER RECHERCHENBERICHT

**Europäisches Patentamt**

| | EINSCHLÄGIGE DOKUMENTE | | | KLASSIFIKATION DER ANMELDUNG (Int Cl ) |
|---|---|---|---|---|
| Kategorie | Kennzeichnung des Dokuments mit Angabe, soweit erforderlich, der maßgeblichen Teile | | betrifft Anspruch | |
| A | FR - A - 2 147 069 (STUDIE CENTRUM VOOR KERNENERGIE) <br><br> * Anspruch 1 * <br><br> & DE - A - 2 236 496 <br><br> -- | | 1 | G 21 C 3/62 |
| A | FR - A - 1 564 186 (EURATOM) <br><br> * Zusammenfassung I, Punkte 4,6; Zusammenfassung II * <br><br> & DE - A - 1 771 171 <br><br> ---- | | 1 | |

**RECHERCHIERTE SACHGEBIETE (Int. Cl.³)**

G 21 C 3/62

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt

| Recherchenort | Abschlußdatum der Recherche | Prüfer |
|---|---|---|
| Den Haag | 03-11-1980 | VAN DEN BULCKE |

EPA form 1503.1   06.78